# EUROPEAN PATENT SPECIFICATION

(11) **EP 3 806 288 B1**
(45) Date of publication and mention of the grant of the patent: **02.07.2025**
(21) Application number: 19819686.7
(22) Date of filing: 16.01.2019
(51) Int. Cl.: H02K 1/276, H02K 21/14

(54) **DRIVING MOTOR**
ANTRIEBSMOTOR
MOTEUR D'ENTRAÎNEMENT

(30) Priority: 11.06.2018 CN 201820899338 U; 08.08.2018 CN 201810896858
(43) Date of publication of application: 14.04.2021
(73) Proprietor: Zhejiang Baolong M&E Co., Ltd., Yueqing City, Zhejiang Province (CN); Shenzhen Yunding Information Technology Co., Ltd., Shenzhen (CN)
(72) Inventor: GUO, Zhiyan, Honghu, Hubei 433204 (CN); LI, Jun, Lanxi, Zhejiang 321114 (CN); LIN, Fangkui, Yueqing City, Zhejiang 325600 (CN)
(74) Representative: Bayramoglu et al.
(86) International application number: PCT/CN2019/071897
(87) International publication number: WO 2019/237736

(56) References cited:
- WO-A1-2017/152660
- CN-A- 101 669 266
- CN-A- 105 305 679
- CN-A- 105 305 679
- CN-A- 105 406 621
- CN-A- 105 576 867
- CN-A- 106 230 215
- CN-A- 108 808 918
- CN-U- 204 349 706
- JP-A- 2004 260 988
- JP-A- H07 236 295
- JP-A- H10 174 323
- JP-A- H11 332 144
- JP-U- S5 282 804

## Description

### TECHNICAL FIELD

The present invention relates to the technical field of motors, in particular to a drive motor.

### BACKGROUND

A motor is an electromagnetic device designed to convert or transmit electric energy according to the law of electromagnetic induction, as well as a drive mechanism. Motors are widely used in vehicles and household appliances such as electric toothbrushes, hair dryers and the like.

The motor iron core includes a stator iron core and a rotor iron core. The motor iron core plays a pivotal role in the entire motor and functions to increase the magnetic flux of the inductive coil to achieve the maximum conversion of electromagnetic power. Prior rotor iron core structures, however, have the following shortcomings.
(1) A traditional motor iron core has a complicated and bulky structure, which increases the size of the entire motor and increases the space occupied by the motor.
(2) The method of assembling the iron core and magnets is laborious and inconvenient, which greatly impedes the installation and use of the magnet.

In view of the above-mentioned problems, it is highly desirable to improve the existing motor structure, simplify the iron core structure, and reduce the size of the iron core, thereby reducing the space occupied by the motor while facilitating the installation and use of the magnet. JP H10 174323 A relates to a rotor of a permanent magnet type motor provided with a permanent magnet inside a rotor core, and more particularly to a two-pole motor. The present invention presents a rotor core made of a laminated electromagnetic steel plate, a shaft hole for inserting a rotating shaft provided in the rotor core, and the shaft hole and the rotor core, four permanent magnets that form a two-pole field inserted between the outer peripheral surface and are arranged at intervals from each other for each pole, a magnet insertion hole into which the permanent magnet is inserted. However, this document fails to disclose a stator iron including the first iron core and a second iron core, wherein the second iron core is arranged inside the first iron core and iron cores are connected to each other by an iron core baffle, wherein the both ends of the iron core baffle and the iron cores are detachably arranged and the two sides of the first iron core are provided with limiting slots and limiting plates protrude from two sides of the iron core baffle to increase the efficiency of assembling the drive motor and to improve the performance of the motor. JP H07 236295 A relates to a drive control method for a so-called internal magnetic brushless DC motor in which a permanent magnet is arranged inside a rotor core. The present invention includes an inverter control unit that controls an output voltage of an inverter to which a DC voltage is applied, and torque components (q) that are orthogonal to each other on rotational coordinates. In the drive control method of an internal magnetic brushless DC motor in which a torque current command and an exciting current command are input to the inverter control unit separately for the shaft component) and the exciting component (d-axis component), the torque current command and the motor are mounted on the motor. However, this document fails to disclose a stator iron including the first iron core and a second iron core, wherein the second iron core is arranged inside the first iron core and iron cores are connected to each other by an iron core baffle, wherein the both ends of the iron core baffle and the iron cores are detachably arranged and the two sides of the first iron core are provided with limiting slots and limiting plates protrude from two sides of the iron core baffle to increase the efficiency of assembling the drive motor and to improve the performance of the motor. CN204349706U discloses a generator having a power of 6 kW. The generator comprises a motor housing, a stator, and a rotor. The rotor comprises a rotor shaft, a rotor core and a permanent magnet. The rotor core is composed of a plurality of overlapping punching sheets, and an axial hole matching the rotor shaft is provided in the middle of the punching sheet. The punching sheet is also provided with two groups of rectangular permanent magnet mounting holes arranged axially symmetrically, and each group of permanent magnet mounting holes includes two permanent magnet mounting holes arranged in an eight-shaped shape, and a connecting groove is provided between the two closest rectangular corners of the two permanent magnet mounting holes in each group, and the permanent magnet is inserted into the permanent magnet mounting hole. JPS5282804U discloses a permanent magnet type rotating machine in which a rotor has a north pole permanent magnet and a south pole permanent magnet fitted inside an iron core with a circular cross section, self-starting winding slots provided around the entire outer circumference, and grooves extending in the axial direction provided near the circumferential ends of the north pole permanent magnet and the south pole permanent magnet, and a housing in which a coil that moves relative to the magnetic flux generated by the permanent magnet is installed is mounted coaxially with the rotor. WO2017/152660A1 discloses an internal heat dissipation salient pole rotor comprising a laminated stamped sheet iron core, a magnetic tile, a rotor mandrel, a baffle, a fan, a flexible shaft circlip, and a bearing. The laminated stamped sheet iron core is formed by stamped sheets being laminated and fixed together. Openings are provided symmetrically at the outer circular edge of the stamped sheets. Arc-shaped grooves are provided on the outer circumference of the stamped sheets. The center of the circle in which the grooves are provided is alternately arranged with the center of the stamped sheets. Four inner ventilation channels are evenly distributed between the grooves and an inner ring of the stamped sheets. Vents fitting the inner ventilation channels are provided on the baffle. The fan is connected to the bottom of the rotor mandrel. The bearing is connected to the top of the rotor mandrel. The weight of the rotor is reduced by the openings symmetrically provided on the outer circular edge of the stamped sheets, and the high temperature brought forth by high speed rotation of the rotor is reduced by the inner ventilation channels provided on the stamped sheets and the vents used in tandem with the fan, thus preventing a motor from burning. The center of the circle in which the arc-shaped grooves for mounting the magnetic tile are provided is alternately arranged with the center of the stamped sheets, air gaps are provided evenly and reasonably. CN105406621A discloses a rotor punching sheet with a hidden pole structure for a small-power rare earth permanent magnet generator. The rotor punching sheet comprises a sheet body, wherein a circular hole matching with a rotor core is provided in the middle of the sheet body, and two symmetrically distributed sector-shaped notches with a central angle of 56 degrees are provided on the sheet body, two symmetrically distributed sector-shaped sheet bodies are formed between the two sector-shaped notches, and each sector-shaped sheet body is evenly distributed with two sector-shaped magnetic tile mounting holes with a central angle of 60 degrees. JP2004260988A discloses a stator assembly for a motor. The stator assembly comprises a plurality of yokes formed by laminating a plurality of iron sheets; and a plurality of poles engaged between the yokes, formed from a magnetic material, and wound with coils.

### SUMMARY

### Technical problem

The present invention aims to solve the technical problem that the existing motor iron core has a complicated structure and a large size, which increases the space occupied by the motor and is not conducive to the installation of the magnet.

### Technical solution

To solve the above-mentioned technical problems,the present invention provides a drive motor as defined in claim 1. The drive motor includes a housing and a stator iron core. The stator iron core is arranged inside the housing. A rotor iron core having two-poles is placed through the inside of the stator iron core. The rotor iron core includes a cylindrical iron core body. The cylindrical iron core body is provided with a plurality of mounting slots with magnets inserted therein.

The plurality of mounting slots include two groups of mounting slots, and the two groups of mounting slots are provided on an upper side and a lower side of the cylindrical iron core body, which are corresponding to the two-poles respectively. Each group of the two groups of mounting slots include two mounting slots, and the two mounting slots in the each group are symmetrically arranged each other with respect to a radial symmetry line of the cylindrical iron core body wherein the symmetry line is a d-axis of the rotor. A central part of the cylindrical iron core body is provided with a through hole, wherein a rotating shaft is inserted into the through hole.

Two grooves having a trapezoidal shape gradually narrowing toward the through hole and extending fully along the axial direction of the cylindrical iron core body are symmetrically formed at both end sides of a radial axis of the rotor, respectively, on a periphery of the cylindrical iron core body with respect to a symmetry line of the two grooves, wherein the radial axis of the rotor is perpendicular to the d-axis of the rotor. The symmetry line of the two mounting slots in the each group coincides with the symmetry line of the two grooves. Each mounting slot of the plurality of mounting slots is rectangular, wherein each magnet has the same shape as the corresponding mounting slot; the plurality of mounting slots are arranged along a circumferential direction of the rotor iron core. Each of both sides of the each mounting slot is provided with a magnetic-leakproof air slot; and the magnetic-leakproof air slot is void closed within the cylindrical iron core body in a cross-section perpendicular to an axial direction of the cylindrical iron core body; a partition is provided between the two mounting slots in the same group; and the shape of each magnetic-leakproof air slot at the most distant ends of the mounting slots in the same group is an arc, and a shape of the magnetic-leakproof air slots at the closest ends of the two mounting slots in the same group is a combination of an arc and a straight line, such that each partition has a radially inner rectangular portion longitudinally extending along the d-axis, radially outwards from the two adjacent radially inner corners of the mounting slots in the same group, and a radially outer portion extending from the rectangular portion in an arc-shaped manner towards the two adjacent radially outer corners of the mounting slots in the same group.

Preferably, the stator iron core consists of two symmetrical pieces; each of the two symmetrical pieces includes a first iron core connected to the housing and a second iron core arranged inside the first iron core; the first iron core and the second iron core are connected by a core column, and a slot for winding a coil is enclosed by the first iron core, the second iron core and both sides of the core column; Alternatively, both sides of the two first iron cores are connected by an iron core baffle; both ends of the iron core baffle and the two first iron cores are detachably arranged; the two sides of the first iron core are provided with limiting slots, and limiting plates protrude from two sides of the iron core baffle.

Preferably, the each mounting slots is arranged adjacent to the edge of the rotor iron core.

### Advantages

Compared with the prior art, the present invention simplifies the structure of the iron core body and reduces its size, thereby reducing the space occupied by the motor. The iron core body adopts an embedded type, having a simple and compact structure. Thus, it is easy to mount the iron core on a motor. Moreover, the magnets are mounted in the mounting slots by means of insertion, which is quick and convenient to operate. Each of both sides of the mounting slot is provided with a magnetic-leakproof air slot to prevent the leakage of the electromagnetic force of the magnet, so that the electromagnetic force of the magnet can be effectively utilized to improve the performance of the motor.

### BRIEF DESCRIPTION OF THE DRAWINGS

FIG. 1 is an exploded view of the present invention;
FIG. 2 is a cross-sectional view of the present invention;
FIG. 3 is a structural schematic view of the rotor iron core of the present invention (not constituting a part of the present invention); and
FIG. 4 is a side view of the rotor iron core of the present invention.

### DETAILED DESCRIPTION OF THE EMBODIMENTS

### Optimal embodiment

The present invention provides a drive motor, the structure of the iron core body is simplified and its size is reduced, thereby reducing the space occupied by the motor. The iron core body has a simple and compact structure and is easily mounted on the motor. Moreover, the magnets are mounted in the mounting slots by means of insertion, which is quick and convenient to operate. The present invention will be described in detail below with reference to the drawings and specific implementations of the specification.

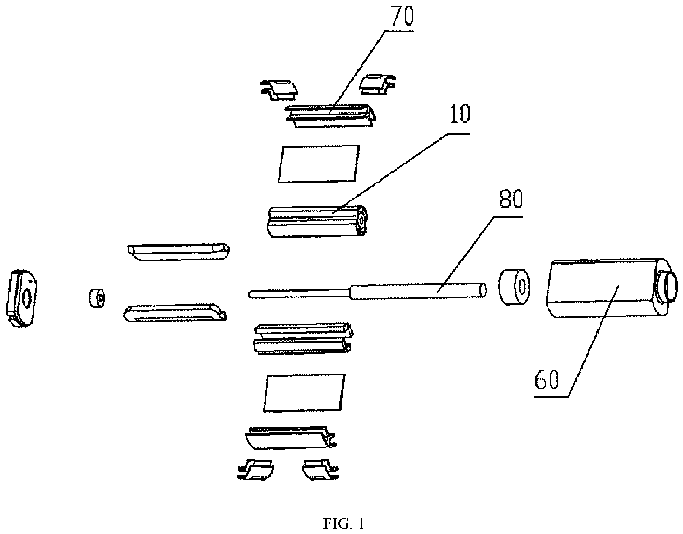

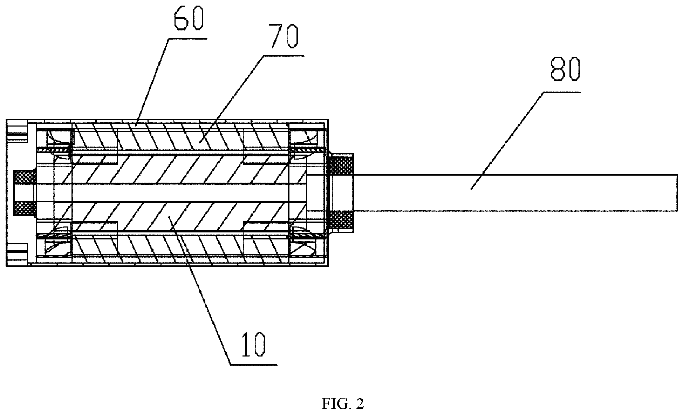

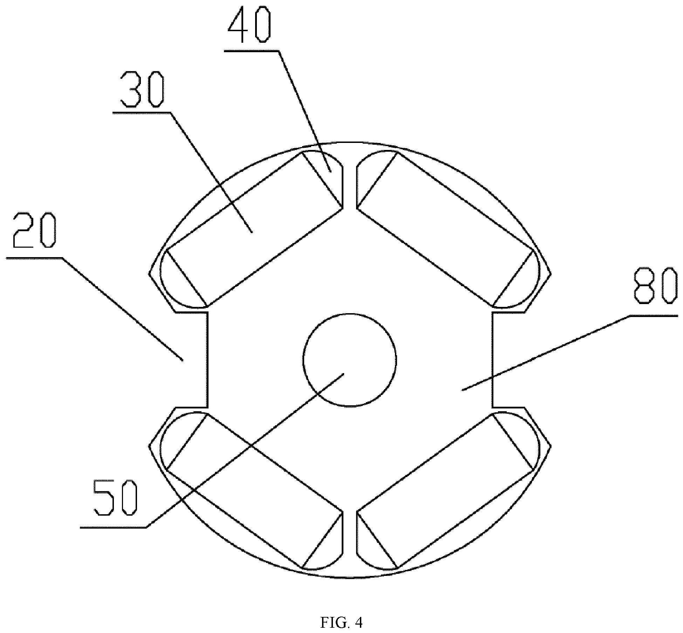

As shown in FIGS. 1-4, a drive motor includes the housing 60 and the stator iron core 70 arranged inside the housing 60. A rotor iron core is placed through the inside of the stator iron core 70. The rotor iron core includes the cylindrical iron core body 10, and two grooves 20 are symmetrically formed on a periphery of the iron core body 10 in a radial direction of the iron core body 10. The groove 20 has a trapezoidal shape gradually narrowing toward the through hole 50, so that it is convenient to manually or automatically take the iron core and mount the iron core into the motor.

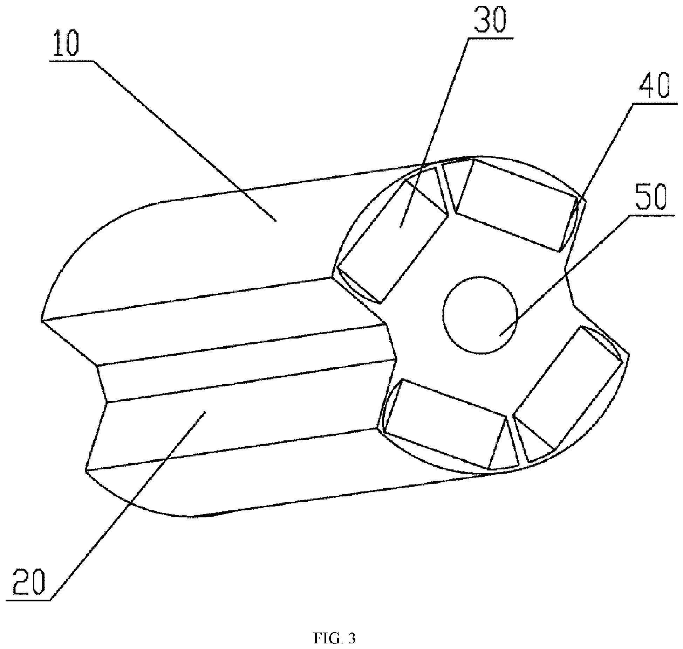

As shown in FIGS. 3-4, the iron core body 10 is provided with a plurality of mounting slots 30. The mounting slots 30 are rectangular and configured to receive rectangular magnets. Correspondingly, the magnet should have the same shape as the mounting slot, and the rectangular magnets are readily produced, thereby improving the production speed. The mounting slots 30 include two groups of mounting slots, and the two groups of mounting slots 30 are provided on the upper side and the lower side of the two grooves 20, respectively. Each group of mounting slots 30 include two mounting slots, and the two mounting slots 30 in the same group are symmetrically arranged with respect to the radial direction of the iron core body 10, which are reasonably distributed to reduce the space occupied.

The symmetry line of the two mounting slots 30 in the same group coincides with the symmetry line of the two grooves 20. This reasonable structure design further reduces the size of the iron core.

Further, since the magnetic field strength of the magnet gradually decreases toward the direction away from the magnet, each mounting slot 30 is preferably arranged adjacent to the edge of the rotor iron core, so that the stator iron core 70 is adjacent to the magnet. In this way, the electromagnetic force of the magnet can be effectively utilized to improve the performance of the motor.

The mounting slots are arranged along the circumferential direction of the rotor iron core, which conforms to the characteristics of the magnetic field distribution, and increases the area of the stator iron core 70 cutting the magnetic field lines, thereby improving the performance of the iron core. Moreover, the size of the iron core is effectively reduced compared to the horizontal arrangement.

A partition is arranged between the two mounting slots 30 in the same group, and preferably, the partition is supported on a top leg of the magnet, so that the magnet is fixed more firmly and is prevented from shaking.

In the present invention, each of both sides of the mounting slot 30 is provided with the magnetic-leakproof air slot 40 to facilitate the insertion of the magnet into the mounting slot 30, and prevent the electromagnetic force of the magnet from leaking, so that the electromagnetic force of the magnet can be can effectively utilized to improve the performance of the motor.

The central part of the iron core body 10 is provided with the through hole 50 into which the rotating shaft 80 of the motor is inserted, and then the rotating shaft 80 is driven to rotate by the rotation of the iron core body 10.

The stator iron core 70 is arranged in multiple manners. For example, the stator iron core 70 includes a first iron core connected to the housing 60 and a second iron core arranged inside the first iron core. The first iron core and the second iron core are connected by a core column, and a slot for winding a coil is enclosed by the first iron core, the second iron core and both sides of the core column.

Alternatively, both sides of the two first iron cores are connected by an iron core baffle. Both ends of the iron core baffle and the two first iron cores are detachably arranged. The two sides of the first iron core are provided with limiting slots, and limiting plates protrude from two sides of the iron core baffle. In this arrangement, the iron core can realize fly-fork winding, and the iron core is welded to the iron core baffle after a coil is wound, which increases the efficiency of assembling the drive motor. Additionally, the coil can be filled in the slot to increase the fill factor of the slot, thereby improving the performance of the motor.

The iron core body 10 of the present invention is placed in the space enclosed by two second iron cores, which reduces the size of the drive motor and makes the motor more compact and lightweight.

The present invention simplifies the structure of the iron core body and reduces its size, thereby reducing the space occupied by the motor. The iron core body adopts an embedded type, having a simple and compact structure, and is easily mounted on a motor. Moreover, the magnets are mounted in the mounting slots by means of insertion, which is quick and convenient to operate. Each of both sides of the mounting slot is provided with a magnetic-leakproof air slot to prevent the leakage of the electromagnetic force of the magnet, so that the electromagnetic force of the magnet can be effectively utilized to improve the performance of the motor.

## Claims

1. A drive motor, comprising
a housing (60), and
a stator iron core (70);
wherein
the stator iron core is arranged inside the housing;
a rotor iron core having two-poles is placed through an inside of the stator iron core;
the rotor iron core comprises a cylindrical iron core body (10) and the cylindrical iron core body is provided with a plurality of mounting slots (30) with magnets inserted therein, wherein the plurality of mounting slots comprise two groups of mounting slots, and the two groups of mounting slots are provided on an upper side and a lower side of the cylindrical iron core body, which are corresponding to the two-poles respectively; each group of the two groups of mounting slots comprise two mounting slots, and the two mounting slots in the each group are symmetrically arranged each other with respect to a radial symmetry line of the cylindrical iron core body wherein the symmetry line is a d-axis of the rotor;
a central part of the cylindrical iron core body is provided with a through hole (50), wherein a rotating shaft (80) is inserted into the through hole;
two grooves (20) having a trapezoidal shape gradually narrowing toward the through hole and extending fully along the axial direction of the cylindrical iron core body are symmetrically formed at both end sides of a radial axis of the rotor, respectively, on a periphery of the cylindrical iron core body with respect to a symmetry line of the two grooves, wherein the radial axis of the rotor is perpendicular to the d-axis of the rotor and, the symmetry line of the two mounting slots in the each group coincides with the symmetry line of the two grooves;
each mounting slot of the plurality of mounting slots is rectangular, wherein each magnet has the same shape as the corresponding mounting slot; the plurality of mounting slots are arranged along a circumferential direction of the rotor iron core; and
each of both sides of the each mounting slot is provided with a magnetic-leakproof air slot (40); and the magnetic-leakproof air slot (40) is void closed within the cylindrical iron core body (10) in a cross-section perpendicular to an axial direction of the cylindrical iron core body;
a partition is provided between the two mounting slots in the same group;
and the shape of each magnetic-leakproof air slot at the most distant ends of the mounting slots in the same group is an arc, and
a shape of the magnetic-leakproof air slots at the closest ends of the two mounting slots in the same group is a combination of an arc and a straight line,
such that each partition has a radially inner rectangular portion longitudinally extending along the d-axis, radially outwards from the two adjacent radially inner corners of the mounting slots in the same group,
and a radially outer portion extending from the rectangular portion in an arc-shaped manner towards the two adjacent radially outer corners of the mounting slots in the same group.

2. The drive motor according to claim 1, wherein,
the stator iron core (70) consists of two symmetrical pieces; each of the two symmetrical pieces includes a first iron core connected to the housing (60) and a second iron core arranged inside the first iron core; the first iron core and the second iron core are connected by a core column, and a slot for winding a coil is enclosed by the first iron core, the second iron core and both sides of the core column; or both sides of the two first iron cores are connected by an iron core baffle; both ends of the iron core baffle and the two first iron cores are detachably arranged; the two sides of the first iron core are provided with limiting slots, and limiting plates protrude from two sides of the iron core baffle.

3. The drive motor according to claim 1, wherein,
the each mounting slot is arranged adjacent to an edge of the rotor iron core.

## Patentansprüche

1. Antriebsmotor, umfassend
ein Gehäuse (60); und
einen Statoreisenkern (70);
wobei
der Statoreisenkern im Inneren des Gehäuses eingerichtet ist;
einen Rotoreisenkern, der zwei Pole aufweist, durch ein Inneres des Statoreisenkerns platziert ist;
der Rotoreisenkern einen zylindrischen Eisenkernkörper (10) umfasst und der zylindrische Eisenkernkörper mit einer Vielzahl von Befestigungsschlitzen (30) mit darin eingesetzten Magneten versehen ist, wobei die Vielzahl von Montageschlitzen zwei Gruppen von Montageschlitzen umfasst und die beiden Gruppen von Montageschlitzen auf einer Oberseite und einer Unterseite des zylindrischen Eisenkernkörpers, die jeweils den beiden Polen entsprechen, bereitgestellt sind; jede Gruppe der beiden Gruppen von Montageschlitzen zwei Montageschlitze umfasst, und die beiden Montageschlitze in jeder Gruppe zueinander symmetrisch in Bezug auf eine radiale Symmetrielinie des zylindrischen Eisenkernkörpers eingerichtet sind, wobei die Symmetrielinie eine d-Achse des Rotors ist;
ein zentraler Teil des zylindrischen Eisenkernkörpers mit einem Durchgangsloch (50) versehen ist, wobei eine rotierende Welle (80) in das Durchgangsloch eingesetzt ist;
zwei Nuten (20), die eine trapezförmige Form aufweisen, die sich allmählich in Richtung des Durchgangslochs verengen und sich vollständig entlang der axialen Richtung des zylindrisch geformten Eisenkernkörpers erstrecken, an beiden Endseiten einer radialen Achse des Rotors symmetrisch gebildet sind, bzw. auf einer Peripherie des zylindrischen Eisenkernkörpers in Bezug auf eine Symmetrielinie der beiden Nuten, wobei die radiale Achse des Rotors senkrecht zu der d-Achse des Rotors steht und die Symmetrielinie der beiden Montageschlitze in jeder Gruppe mit der Symmetrielinie der beiden Nuten zusammenfällt;
jeder Montageschlitz der Vielzahl von Montageschlitzen rechteckig ist, wobei jeder Magnet die gleiche Form wie der entsprechende Montageschlitz aufweist; die Vielzahl von Montageschlitzen entlang einer Umfangsrichtung des Rotoreisenkerns eingerichtet ist; und
jede der beiden Seiten jedes Befestigungsschlitzes mit einem magnetischdichten Luftschlitz (40) versehen ist; und der magnetischdichte Luftschlitz (40) leer innerhalb des zylindrischen Eisenkernkörpers (10) in einem Querschnitt senkrecht zu einer axialen Richtung des zylindrischen Eisenkernkörpers geschlossen ist;
eine Trennwand zwischen den beiden Montageschlitzen in derselben Gruppe bereitgestellt ist;
und die Form jedes magnetisch dichten Luftschlitzes an den am weitesten entfernten Enden der Montageschlitze in derselben Gruppe ein Bogen ist, und
eine Form der magnetisch dichten Luftschlitze an den nächstgelegenen Enden der beiden Montageschlitze in derselben Gruppe eine Kombination aus einem Bogen und einer geraden Linie derart ist,
dass jede Trennwand einen radial inneren rechteckigen Teil aufweist, der sich längs entlang der d-Achse erstreckt, radial nach außen von den beiden angrenzenden radial inneren Ecken der Befestigungsschlitze in derselben Gruppe,
und sich ein radial äußerer Abschnitt von dem rechteckigen Abschnitt auf eine bogenförmige Weise in Richtung der beiden angrenzenden radial äußeren Ecken der Befestigungsschlitze in derselben Gruppe erstreckt.

2. Antriebsmotor nach Anspruch 1, wobei
der Statoreisenkern (70) aus zwei symmetrischen Stücken besteht; jedes der beiden symmetrischen Stücke einen ersten Eisenkern beinhaltet, der mit dem Gehäuse (60) verbunden ist, und einen zweiten Eisenkern, der innerhalb des ersten Eisenkerns eingerichtet ist; der erste Eisenkern und der zweite Eisenkern durch eine Kernsäule verbunden sind, und ein Schlitz zum Wickeln einer Spule durch den ersten Eisenkern, den zweiten Eisenkern und beide Seiten der Kernsäule umschlossen ist; oder beide Seiten der beiden ersten Eisenkerne durch ein Eisenkernprallblech verbunden sind; beide Enden des Eisenkernprallblechs und der beiden ersten Eisenkerne abnehmbar eingerichtet sind; die beiden Seiten des ersten Eisenkerns mit Begrenzungsschlitzen versehen sind und Begrenzungsplatten aus zwei Seiten des Eisenkernleitblechs hervorragen.

3. Antriebsmotor nach Anspruch 1, wobei
jeder Montageschlitz an eine Kante des Rotoreisenkerns angrenzend eingerichtet ist.

## Revendications

1. Moteur d'entraînement, comprenant
un boîtier (60), et
un noyau de fer de stator (70) ;
dans lequel
le noyau de fer de stator est disposé à l'intérieur du boîtier ;
un noyau de fer de rotor ayant deux pôles est placé à l'intérieur du noyau de fer de stator ; le noyau de fer de rotor comprend un corps de noyau de fer cylindrique (10) et le corps de noyau de fer cylindrique est pourvu d'une pluralité de fentes de montage (30) avec des aimants insérés dedans, dans lequel la pluralité de fentes de montage comprennent deux groupes de fentes de montage, et les deux groupes de fentes de montage sont ménagés sur un côté supérieur et un côté inférieur du corps de noyau de fer cylindrique, qui correspondent aux deux pôles respectivement ; chaque groupe des deux groupes de fentes de montage comprend deux fentes de montage, et les deux fentes de montage dans chaque groupe sont disposées symétriquement l'une à l'autre par rapport à une ligne de symétrie radiale du corps de noyau de fer cylindrique dans lequel la ligne de symétrie est un axe d du rotor ;
une partie centrale du corps de noyau de fer cylindrique est pourvue d'un trou traversant (50), dans lequel un arbre rotatif (80) est inséré dans le trou traversant ;
deux rainures (20) présentant une forme trapézoïdale se rétrécissant graduellement vers le trou traversant et s'étendant entièrement le long de la direction axiale du corps de noyau de fer cylindrique sont formées symétriquement au niveau de chacun des deux côtés extrêmes d'un axe radial du rotor, respectivement, sur une périphérie du corps de noyau de fer cylindrique par rapport à une ligne de symétrie des deux rainures, dans lequel l'axe radial du rotor est perpendiculaire à l'axe d du rotor et la ligne de symétrie des deux fentes de montage dans chaque groupe coïncide avec la ligne de symétrie des deux rainures ;
chaque fente de montage de la pluralité de fentes de montage est rectangulaire, dans lequel chaque aimant présente la même forme que la fente de montage correspondante ; la pluralité de fentes de montage sont arrangées le long d'une direction circonférentielle du noyau de fer de rotor ; et
chacun des deux côtés de chaque fente de montage est pourvu d'une fente d'air de prévention de fuite magnétique (40) ; et la fente d'air de prévention de fuite magnétique (40) est vide et fermée au sein du corps de noyau de fer cylindrique (10) selon une coupe transversale perpendiculaire à une direction axiale du corps de noyau de fer cylindrique ;
une partition est ménagée entre les deux fentes de montage dans le même groupe ;
et la forme de chaque fente d'air de prévention de fuite magnétique aux extrémités les plus éloignées des fentes de montage dans le même groupe est un arc, et
une forme des fentes d'air de prévention de fuite magnétique au niveau des extrémités les plus proches des deux fentes de montage est une combinaison d'un arc et d'une ligne droite,
de telle sorte que chaque cloison présente une portion rectangulaire radialement interne s'étendant longitudinalement le long de l'axe d, radialement vers l'extérieur à partir de deux coins radialement internes adjacents des fentes de montage dans le même groupe,
et une portion radialement externe s'étendant à partir de la portion rectangulaire selon une forme d'arc vers les deux coins radialement externes adjacents des fentes de montage dans le même groupe.

2. Moteur d'entraînement selon la revendication 1, dans lequel,
le noyau de fer de stator (70) est constitué de deux pièces symétriques ; chacune des deux pièces symétriques comporte un premier noyau de fer relié au boîtier (60) et un deuxième noyau de fer disposé à l'intérieur du premier noyau de fer ; le premier noyau de fer et le deuxième noyau de fer sont reliés par une colonne de noyau, et une fente pour enrouler une bobine est renfermée par le premier noyau de fer, le deuxième noyau de fer et les deux côtés de la colonne de noyau ; ou les deux côtés des deux premiers noyaux de fer sont reliés par une chicane de noyau de fer ; les deux extrémités de la chicane de noyau de fer et les deux premiers noyaux de fer sont disposés de manière détachable ; les deux côtés du premier noyau de fer sont pourvus de fentes de limitation, des plaques de limitation font saillie des deux côtés de la chicane de noyau de fer.

3. Moteur d'entraînement selon la revendication 1, dans lequel,
chaque fente de montage est disposée adjacente à un bord du noyau de fer de rotor.
